Europäisches Patentamt

European Patent Office

Office européen des brevets

(11) Publication number: **0 520 577 A1**

## EUROPEAN PATENT APPLICATION

(21) Application number: 92201857.7

(22) Date of filing: 24.06.92

(51) Int. Cl.5: **B29C 65/66**, A47B 13/08

(30) Priority: 24.06.91 NL 9101079

(43) Date of publication of application:
**30.12.92 Bulletin 92/53**

(84) Designated Contracting States:
**AT BE CH DE DK ES FR GB GR IT LI LU MC NL PT SE**

(71) Applicant: **LAWN COMFORT S.A.**
**Parc Industriel, 12 rue Wallonie**
**B-4430 Ans-Alleur(BE)**

(72) Inventor: **Westerburgen, Josephus Petrus Maria**
**Belenbroeklaan 34**
**NL-6093 BT Heythuysen(NL)**

(74) Representative: **Bleukx, Lucas Lodewijk Maria, Ir. et al**
**OCTROOIBUREAU DSM Postbus 9**
**NL-6160 MA Geleen(NL)**

(54) **Process for producing an assembly.**

(57) Process for producing an assembly, such as a table top (1), comprising two parts, a first part having a flat section (3) with circumferential edge and a second part of plastic having a flat section of substantially the same shape and dimensions as the flat section of the first part, which second part in any case is produced by means of a thermoforming technique, the flat section of the second part being provided with a raised circumferential edge (4) having an open slot facing inwards (5), in which process the flat section of the first part is positioned, after the formation of the second part, on the flat section of the second part and is thus allowed to cool and the circumferential edge of the first part is incorporated, after cooling, in the inward-facing slot of the circumferential edge of the second part.

FIG 1

The invention relates to a process for producing an assembly comprising two parts, a first part having a flat section with circumferential edge and a second part of plastic having a flat section of substantially the same shape and dimensions as the flat section of the first part, which second part in any case is produced by means of a thermoforming technique.

From the German Offenlegungsschrift 2741198 a process is known for producing a table consisting of a table top with a circumferential edge applied by a thermoforming technique with projections at the four corners in which the table legs can be incorporated. The circumferential edge with projections is made of polyurethane. The table top has a circumferential edge provided with a groove which the polyurethane penetrates into during the formation of the circumferential edge with projections. A solid bond is obtained between table top and circumferential edge with projections. The table top consists of a chipboard covered on either side with a plastic layer. The effect of said process is that a closed connection is obtained between the circumferential edge of the table top and the polyurethane circumferential edge, so that no dirt can penetrate that would otherwise have been difficult to remove. This is important from a hygienic point of view because the possible penetration of perishable dirt, substantially leavings after meals, with all its unpleasant consequences, is thus avoided.

When this kind of table is used as outdoor table, for instance as garden table or terrace table, it will be liable to temperature changes causing the various materials which the table is composed of to show different degrees of expansion or shrinkage. This may result, on the one side, in the formation of empty spaces between the various materials, so that the intended effect is lost, or, on the other side, tensions may arise between the various materials, which may result in a permanent deformation of, for instance, the table top.

The object of the invention is to produce an assembly as mentioned in the preamble in which the said disadvantages do not occur.

According to the invention this is achieved in that the flat section of the second part is provided with a raised circumferential edge having an open slot facing inwards, in that after the formation of the second part the flat section of the first part is positioned on the flat section of the second part and is thus allowed to cool, with the circumferential edge of the first part being incorporated, after cooling, in the inward-facing slot of the circumferential edge of the second part.

An assembly may be understood to mean a table top built up of two flat parts, the first part of which forms the top leaf and the second part the bottom leaf. The second part is provided with a raised circumferential edge with an open slot facing inwards. After the second part has been produced by means of a thermoforming technique, and is still hot, the first part, which dimensionally closely fits into the slotted raised edge of the hot second part, is laid on top of it. Cooling causes the second part to shrink, in consequence of which the circumferential edge of the first part is incorporated in the inward-facing slot of the circumferential edge of the second part. During cooling, the circumferential edge of the second part shrinks round the circumferential edge of the first part in such a manner that no dirt can penetrate between the two parts.

In order to avoid any tensions by differential expansion of the materials used between the first and the second part during temperature changes, the dimensions of the flat section of the first part are, in a cooled state, slightly smaller than the dimensions of the flat section of the second part, in any case as measured in the slots. Hence, some empty space is available in the slots, allowing the circumferential edge of the first part to expand freely in respect of the second part and, conversely, allowing the circumferential edge of the second part to shrink freely in respect of the first part without the respective parts interfering with each other. When used as garden table, this is very important because the table may be exposed to great temperature changes. In order also to obtain a solid bond between the first and the second part, an adhesive is applied according to the invention between the two parts, which adhesive does not stick to the material of the second part, and this second part, in any case the flat section thereof, is provided with openings which are filled with the adhesive when the two parts have been pressed together, which adhesive takes the shape of pins on the spot, which pins extend through these openings, and each pin is stuck at one end to the flat section of the first part and the other end of the pin is thickened causing the second part to be clamped against the first part.

The first part, or the top leaf of the table, is made of a polar plastic and the second part of an apolar plastic. The bottom leaf may also have projections incorporated therein in the injection moulding process to allow the table legs to be fastened thereto.

According to the invention, the first part may made of a melamine-based resin, such as melamine-formaldehyde resin, and the second part of a polyolefin, such as polyethylene or polypropylene. The adhesive used between the first and the second part is a thermosetting material which sets below the melting temperature of the material of the second part. As stated earlier, the first part is a top leaf of a table and the second part the support element or bottom leaf that goes with it.

During the formation of the number of pins between the first and the second part at least a part of this number is formed, according to the invention, in one process step, in which process step the pins formed simultaneously are provided with a common thickened end.

It is also possible for the said openings in the second part to be tapered with widened ends. In that case the thickened ends of the pins are provided in the flat section of the second part.

The assembly described can be used particularly for garden tables to be made of plastic. In order to protect the non-scratchproof table top, a top layer of melamineformaldehyde resin is applied according to the invention. With the ever increasing practice of performing outdoor activities in good weather conditions, such as for instance, barbecuing, it is important that the top of the table should be scratchproof and that no dirt, particularly leavings, should find their way between top and bottom leaves and that, moreover, at temperature changes, the difference in the expansion of the top and bottom leaves should not cause undesired tensions, so that no warping of the table top can occur and the circumferential edge of the bottom leaf which encloses the circumferential edge of the top leaf cannot be pushed away.

By applying the process according to the invention a sound assembly of top and bottom leaves is obtained, which assembly is excellently suited to be used in garden tables.

Other characteristics and advantages will be clear from the description below, in which reference will be made to the attached drawings.

In these drawings:

Fig. 1 is a section of a table of which the second part, or the plastic base structure, is still hot and the top leaf has been laid on it;

Fig. 2 is a section as in fig. 1 with the base structure cooled down;

Fig. 3 is a second embodiment of the circumferential edges of the top and bottom leaves of the table;

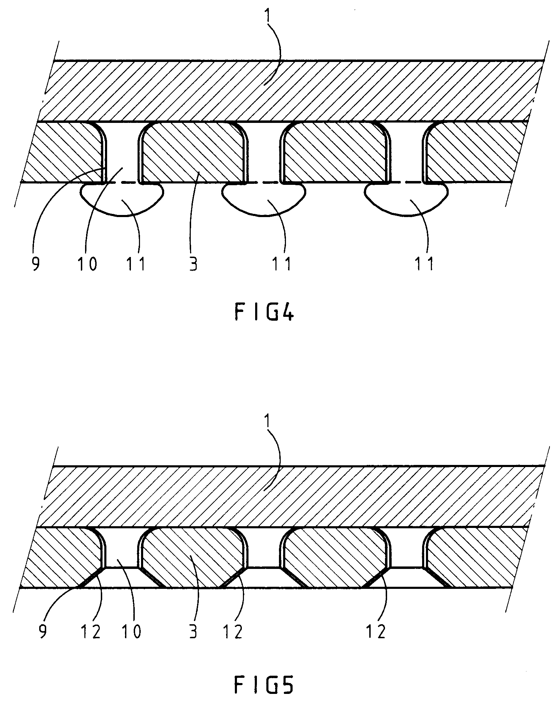

Fig. 4 is a section of a part of a table top with an adhesive applied between the top and bottom leaves;

Fig. 5 is an embodiment constituting an adjustment of the embodiment of fig. 4.

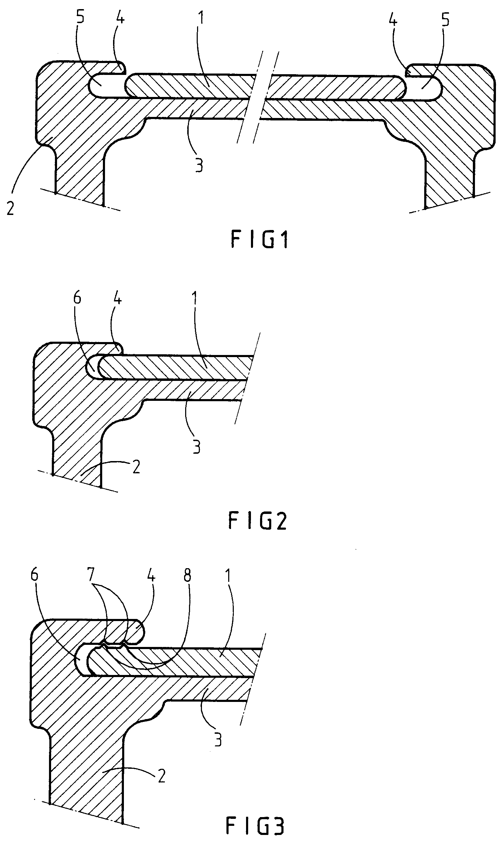

1 shows a top leaf for a table, but it may also be a top leaf for another application. This top leaf 1 is made of a material based on a melamine-containing resin as normally commercially available in a great many patterns. 2 shows a support element made of plastic for a table with a flat section 3 having substantially the same shape and dimensions as top leaf 1. The flat section 3 of table 2 is provided with a raised circumferential edge 4 having an open slot 5 facing inwards. After the formation of part 2, top leaf 1 is laid on the flat section 3 of table 2 (see fig. 1). After that, table 2 is allowed to cool, so that it shrinks causing the circumferential edge of top leaf 1 to be incorporated in the inward-facing slot 5 of circumferential edge 4 of table 2. This is shown in fig. 2. This figure also shows that the dimensions of top leaf 1 are slightly smaller than the dimensions of flat section 3 of table 2. It can be seen that, after cooling, some space 6 remains in slots 5. This has been done to meet any differential expansion of the various materials of which top leaf 1 and table 2 are made during temperature changes. Thus tensions between top leaf 1 and table 2 are avoided, which tensions would otherwise have caused the table to warp and/or circumferential edge 4 to be pushed away. The melamine-containing resin to be used for the top leaf may be melamine-formaldehyde resin. The plastic used for table 2 is a polyolefin, for instance polyethylene or polypropylene.

As shown in fig. 3, raised edges 8 have been provided on the circumference of top leaf 1 engaging in corresponding grooves 7 of circumferential edge 4. This provides a proper seal between the two parts on the circumference.

In order to obtain a proper bond between top leaf 1 and flat section 3 of table 2 an adhesive is applied between the two parts, as shown in fig. 3, which adhesive does stick to top leaf 1, but not to leaf 3 of the table.

Leaf 3 is provided with openings which are filled, after parts 1 and 3 have been pressed together, with an adhesive, which forms into pins 10 extending through these openings. Openings 10 are cylinder-shaped, but other forms are possible also. In the embodiment shown, openings 10 show a concical widening at the ends facing top leaf 1. Thus a larger adhesive surface is obtained in respect of top leaf 1. Of each pin 10 one end is stuck to top leaf 1 and the other end is so shaped as to form a thickened end 11 by which leaf 3 is clamped against top leaf 1. Pins 10 can be formed by means of all plastics processing techniques available. Particularly casting and/or injection moulding may be thought of.

In another embodiment, shown in fig. 5, openings 9 in leaf 3 have widened ends 12 at the bottom, in which widened ends the thickened ends 13 of pins 10 are formed by the adhesive.

The adhesive used is preferably a thermosetting material that sets below the melting temperature of the material of table 2. Good results are obtained when PUR foam is used, but other thermosetting materials, both the one and two-component varieties, are suitable.

In every opening 9, a pin 10 is formed by means of injection moulding. This pin 10 is formed on the spot in that the two parts 1 and 3 are placed one on top of another, upon which they are all of them placed in this position under an injection head which fills the openings 9 with adhesive. In the process, the assembly can be moved every time so that each opening is placed under the injection head in turn, but it is possible also for a structure to be designed in which all pins are formed simultaneously in that an injection head is provided for each opening. The injection head will then be provided with a cavity (cup), in which cavity head 11 can be formed on pin 10 clamping part 3 against top leaf 1. It is possible also for the injection head to be so designed that a plurality of openings 10 are filled by an injection head simultaneously and a common head is formed as it were for all or for a number of pins.

In the embodiment according to fig. 5, the thickened ends 12 are positioned in openings 9. In this embodiment, no common head is formed for all of the pins or for a number of pins jointly, but for each pin separately.

The assembly according to the invention can be used for garden tables or chairs made of plastic. The plastic used, polypropylene in particular, is relatively soft, so that tables in particular were not suited for prolonged use and were often damaged. By applying a top leaf, of for instance melamine formaldehyde resin, according to the invention, this drawback is eliminated.

**Claims**

1. Process for producing an assembly comprising two parts, a first part having a flat section with circumferential edge and a second part of plastic having a flat section of substantially the same shape and dimensions as the flat section of the first part, which second part in any case is produced by means of a thermoforming technique, the process being characterized in that the flat section of the second part is provided with a raised circumferential edge having an open slot facing inwards, in that after the formation of the second part the flat section of the first part is positioned on the flat section of the second part and is thus allowed to cool, with the circumferential edge of the first part being incorporated, after cooling, in the inward-facing slot of the circumferential edge of the second part.

2. Process according to claim 1, characterized in that in a cooled state the dimensions of the flat section of the first part are slightly smaller than the dimensions of the flat section of the second part, at least as measured in the slots.

3. Process according to claims 1 and 2, characterized in that between the two parts an adhesive is applied that does not stick to the material of the second part, and that this second part, in any case the flat section thereof, is provided with openings which are filled with the adhesive when the two parts have been pressed together, which adhesive takes the shape of pins on the spot, which pins extend through these openings, and each pin is stuck at one end to the flat section of the first part and the other end of each pin is thickened causing the second part to be clamped against the first part.

4. Process according to claims 1-3, characterized in that the second part is made of an apolar plastic and the first part is made of a polar plastic.

5. Process according to claims 1 to 4, characterized in that the first part is made of a melamine-based resin and the second part is made of a polyolefin.

6. Process according to any one of the preceding claims, characterized in that the adhesive is a thermosetting material.

7. Process according to claim 6, characterized in that the thermosetting material sets below the melting temperature of the material of the second part.

8. Process according to any one of the preceding claims, characterized in that the first part is a top leaf and the second part forms the support element that goes with it.

9. Process according to any one of claims 3-7 in which a number of pins are formed to constitute connections between the first and the second part, characterized in that at least a part of this number is formed in one processing step.

10. Process according to claim 9, characterized in that the openings in the flat section of the second part have the same diameter over their full depths.

11. Process according to claim 10, characterized in that the pins that are formed simultaneously are provided with a common thickened end.

12. Process according to claim 9, characterized in that the openings in the flat section of the second part have conically widened ends.

13. Process according to claim 12, characterized in that the thickened ends of the pins are provided in the flat section of the second part.

14. Table consisting of a base structure made of a polyolefin and a top of a different material, characterized in that the connection between the top and the base structure is obtained by means of a process according to any one or more of the preceding claims.

FIG1

FIG2

FIG3

FIG4

FIG5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2 053 627 (ETABLISSEMENTS SALVY) * page 1, line 15 - page 1, line 23; figures 1-4 * | 1-2,8 1 | B29C65/66 A47B13/08 |
| X | FR-A-2 338 783 (DEVILLERS) * page 2, line 3 - page 2, line 19; figures 4A-4D * | 1-2 | |
| A | EP-A-0 159 170 (TOYOTA JIDOSHA K.K.) * claims 7-8,10-11; figure 8 * | 3-14 | |
| A | DE-U-8 911 993 (SCHNIEDER) * the whole document * | 1-14 | |

TECHNICAL FIELDS
SEARCHED (Int. Cl.5 )

A47B
B29C

The present search report has been drawn up for all claims

| Place of search | Date of completion of the search | Examiner |
|---|---|---|
| THE HAGUE | 01 OCTOBER 1992 | NOESEN |

EPO FORM 1503 03.82 (P0401)